# EUROPEAN PATENT APPLICATION

(11) **EP 2 336 948 A1**
(43) Date of publication of application: **22.06.2011**
(21) Application number: 09177019.8
(22) Date of filing: 25.11.2009
(51) Int. Cl.: G06K 9/62

(54) **A method for multi modal object recognition based on self-referential classification strategies**

(71) Applicant: Honda Research Institute Europe GmbH, 63073 Offenbach/Main (DE)
(72) Inventor: Grahl, Miranda, 33613, Bielefeld (DE); Joublin, Frank, 63533, Mainhausen (DE); Kummert, Franz, 33613, Bielefeld (DE)
(74) Representative: Rupp, Christian

(57) **Abstract**

The present invention relates to a technique for controlling a camera system towards interesting points learned from the correlation of visual and auditory properties of an environment. The presented system learns to autonomously build a representation of objects and a structure in its environment using a camera and a microphone.

## Description

The present invention relates to a technique for controlling a camera system towards interesting points learned from the correlation of visual and auditory properties of an environment. The presented system learns to autonomously build a representation of objects and a structure in its environment using a camera and a microphone. A possible implementation is an autonomous robot.

The inventive system is applicable where a situation needs to be assessed or analyzed based on electronically processed information derived from visual and auditory observations. In this it goes further than basic computer/machine vision which is the general discipline of making computers see and understand what is perceived visually. These systems are only capable of processing images consistently and are programmed to perform narrowly defined tasks such as counting objects on a conveyor, reading serial numbers, and searching for surface defects. Digital cameras, smart cameras and/or image processing software are/is used in the process. However, the mentioned applications require very specific setups and often process within predefined parameters.

Since the cameras used in electronic systems are not equivalent to human optics and while people can rely on inference systems and assumptions, electronic systems 'see' by examining individual pixels of images, processing them and attempting to develop conclusions with the assistance of knowledge bases and features such as pattern recognition engines.

The invention aims at allowing an electronic system to perceive and percept (through electronic/optical processing by processing means) an environment of the system while dealing with new situations which occur randomly and happen unpredictably. Hence the invention brings machine vision closer to human vision and allows finer perception and greater flexibility in classification and adaptation. Additionally, the method disclosed herewith allows to autonomously build a representation of objects and a structure in the system's environment and also takes into account auditory information.

The disclosed invention is relevant for human computer interaction, e.g. in cars. The method can be used for a car driving assistant system in order to give the driver additional advices or in autonomous or semi-autonomous vehicles. A driver is increasingly challenged by car equipment of modern cars like a ringing handy and a speaking navigation system that require temporarily attention of the driver. This leads to a reduced ability to detect occluded accident situations. The present invention can be applied to a continuously driver assistant system in order to predict dangerous situations and enables the driver to institute a preventive activity in time. Particularly, this includes situations about potential accident situations that are not directly in the visual field of the driver.

Moreover, the present technique also relates to the field of active vision systems that can be used for object learning with autonomous robots. The present method can be used in applications to robotic platforms in order to enable a robot to explore its environment and determines the position of relevant objects in an interaction with humans. The learned controlling strategy of the robot can be used to focus on objects that are learned from a demonstration.

The camera in this sense is a device that is able to record images, either still or moving. Cameras may work with light of a visible spectrum and/or with other portions of an electromagnetic spectrum. On the other hand, a camera may be a sensor or senor array producing a signal or visual information which allows deriving information on structure(s), shape(s) and feature(s) of/in a 3D environment.

The microphone generally is a transducer or sensor converting acoustic signals into an electrical signal or auditory information. Like the camera, the microphone can be used to obtain information on surroundings. For example the microphone may be used for range detection by detecting (reflected) acoustic signals such as sound and/or pulses previously emitted by an emitter or transmitter.

### Background of the Invention

Object recognition in robotics features a wide range of applications and means to build up a system which learns the structure of a demonstrated object. Hence, it is necessary to understand how humans learn of objects and how they recognize them.

It is well known to the skilled person that "object recognition in computer vision is the task of finding a given object in an image or video sequence" and that "humans recognize a multitude of objects in images with little effort...."
(see http://en.wikipedia.org/wiki/Object_recognition).

The first sentence poses the question on how humans implicitly build an object representation in object learning process. Secondly, the essential question is which features must be available during object learning in order to obtain a valid object representation.

The second sentence of the statement refers to the question of how humans guide their gaze to an object. This also leads to the problem of how humans achieve a constant object representation in order to recognize objects and/or to store them.

The presented method achieves a valid object representation by enhancing its sensitivity to the presented object in a self regularized manner. The present invention refers to an auditory-visual object recognition system which compensates the initially missing representation by auditory modalities.

An example for an object representation is provided in the following in a robotics application. Afterwards, the problems of a recognition system in a steady changing environment are described.

A structure of an object can be given by auditory characteristics (knocking, speech, ringing...) and visual characteristics (color, shape, size ...). In order to facilitate a robot to fix its camera eyes on the object with high accuracy, it is necessary that the robot automatically learns those structures based on visual and auditory properties and develops a controlling strategy. This controlling strategy involves the integration of top down knowledge in a preliminary reactive visual bottom up attention system (e.g. http://en.wikipedia.org/wiki/Salience_(neuroscience)) in order to derive an object classifier (an classification for the object).

Therefore, the present investigation relates to a technique which learns to control a camera system towards interesting objects and/or points. These points are defined in a first learning phase by simple visual properties (intensity, orientation...) defined by Itti and Koch (cf. e.g. L. Itti, C. Koch, and E. Niebur. A model of saliency-based visual attention for rapid scene analysis. IEEE Transactions on Pattern Analysis and Machine Intelligence, 20(11):1254-1259, November 1998) and in a second step by visual properties that have been correlated with auditory cues of the environment. In order to navigate the camera system towards objects, the final step relies in a modulation of an auditory classifier with a visual attention system. This modulation aims to configure the visual system in order to enhance the sensitivity to objects and hence to store a valid object representation.

A simple example (for demonstration purposes) for object recognition refers to a tutoring situation with an infant in which a parent aims to teach the meaning about an object 'cup'. Typically, parents shake the cup and complement the meaning by knocking the cup on the table or accompany the explanation by speech. At the beginning of the teaching scenario, the infant is not able to stable its gaze on the cup. After a few repetitions of the exposure, the infant seems to be interested in and fixates its gaze on the cup and tracks it. Firstly, this example shows that the infant must built a concept. This concept includes an auditory concept of the cup derived from the complementary 'speech' and a visual concept of the cup, e.g., an 'edge symmetry of horizontal and vertical edges' and also requires to integrate the concepts. Secondly, the construction of the concept during the explanation to the object 'cup' also has to be depended on the ability to fixate the gaze to the object.

The present invention suggests a new method and system for the development of the control of an active vision system. Most object recognition systems learn an association of demonstrated objects with predefined classifiers, for example already trained 'knocking classifiers' for the cup. This means before the learning starts, the system is fed with an already trained auditory or visual classifier to learn them in association. A learning process with predefined classifiers, which results from a manually annotated data set by humans, leads to a system unable to adapt to changes of and new situations in the environment. It also leads to the fact that those classifiers are not modifiable during the recognition process as the system does not learn to structure the perceptual information by itself. In order to avoid this drawback, an object recognition system needs to extract and to learn those classifiers unsupervised from its environment. Therefore, the presented method automatically extracts relevant auditory and visual features by a correlation computation based on mutual information in order to gain a valid object representation (concepts). The process of gaining a valid object representation is also influenced by the current state of the modulation in order to control the camera system.

A few approaches have been suggested to estimate audio visual correlations like the method of Slaney (cf., e.g., Slaney, M., Covell, M. FaceSync: A Linear Operator for Measuring Synchronization of Video Facial Images and Audio Tracks. In NIPS, pages 814-820, 2000). Further approaches based on Canonical Correlation Analysis (CCA) are suggested by Bredin and by Kidron (cf., e.g., Kidron, E., Schechner, Y., Elad, M. Cross-Modal Localization via Sparsity. IEEE transactions on signal processing, 55:1390-1404, 2007). CCA-based correlation methods handle all pixels of a camera image and compute a correlation between pixels. This results in a method which is not applicable for a real time learning system as this method consumes high computational time and resources. Similar approaches to the computation of audio visual correlation are proposed by Hershey. This method lacks discontinuity as all observations of audio-visual correlations are equally weighted in time. The problems of the mentioned correlation methods are described by Rolf (cf., e.g., M. Rolf et al., Attention via synchrony: Making use of multimodal cues in social learning, IEEE Transactions on Autonomous Mental Development, vol. 1, Step 1, 05/2009 2009) proposing a method where the correlation is estimated by the use of an exponential smoothing term. With regard to association learning, Deb Roy addresses the problem of finding significant features for the learning of auditory and visual cues between objects and speech (see also Deb Roy et al., Learning Audio-Visual Associations using Mutual Information. Proceedings of International Workshop on Integrating Speech and Image Understanding, Corfu, Greece, pages 147-163, 1999). This approach uses the mutual information as clustering criterion and selects images and speech segments according to their mutual information maximization.

As object learning takes place in a steadily changing environment, the system needs to be able to detect those changes smoothly to update its internal representation of the environment. Therefore, a further important aspect of this invention refers to the learning of object representation during the recognition process and motivates the investigation into incremental learning. This refers to the ability of a system to adapt on current changes of the environment and immediately update the internal object representation in time. This also leads to an efficient data processing.

Until now, less work has been performed in the computational modeling of object recognition, which automatically extracts a structure of auditory and visual cues in order to gain an object representation. Walter and Koch propose a system that links a bottom up attention model with an object recognition system with an attentional modulation (cf., e.g., D. Walther et al., Modeling attention to salient proto-objects. Neural Networks, 19:1395-1407, 2006). This approach focuses solely on visual perceptual properties of the environment and does not take any auditory information into account. Further biologically motivated systems for object recognition assume a predefined speech model to confirm an object hypothesis (cf., e.g., H. Wersing et al., A biologically motivated system for unconstrained online learning of visual objects. Proc. Int. Conf. Artif. Neural Networks ICANN 2006, Athens. Vol. 2, pp. 508-517). Most computational models referring to bottom up attention systems regard the integration of stimulus driven saliency mechanisms in both senses (also see J. Ruesch et al., Multimodal saliency-based bottom-up attention, a framework for the humanoid robot icub, IEEE International Conference on Robotics and Automation Pasadena, CA, USA, May, 2008, May 2008). The system does not aim to structure a preliminary reactive visual system by concepts that are learned from visual and auditory cues of the environment.

### State of the art

The presented invention uses the method proposed by Itti and Koch as initial controlling strategy of the camera system. A second component that is not a new part of the presented invention relates to the correlation of audio and visual cues. The pure correlation method proposed by M. Rolf et al (cf., e.g., M. Rolf et al., Attention via synchrony: Making use of multimodal cues in social learning, IEEE Transactions on Autonomous Mental Development, vol. 1, Step 1, 05/2009 2009) is modified in such a way that only a restricted region of the camera view is taken into account. This region is defined by a small area as active vision starts from a retinal filtered image, whereas the center field (fovea centralis) defines the area with the highest visual activity (cf., e.g., http://de.wikipedia.org/wiki/Netzhaut and http://de.wikipedia.org/wiki/Fovea_centralis).

### Object of the invention

It is an object of the invention to provide a method for the computational modeling of object recognition, which automatically derives an object structure from auditory and visual cues in order to gain an object representation.

### Summary of the Invention

This object is achieved by means of the features of the independent claims. The dependent claims develop further the central idea of the invention.

The invention therefore provides a method for controlling a camera system, comprising the steps of accepting visual information from a visual input means, accepting auditory information from an auditory input means, processing the visual and auditory information by computing a set of filters specifying default visual aspects for the system by a processing means, computing a set of saliency maps during visual filtering (Step 11) by the processing means, computing a saliency which weights each saliency map according to an auditory classification (Step 8) of the auditory information by the processing means, determining when a new saccade should be triggered by a timer logic (Step 5), and choosing a position for the visual input means to look at within the available saliency maps by a saccade logic (Step 4), controlling a tracking movement (Step 3) of the visual input means so that a gazed point is kept in the central region of the visual input means before a next saccade is triggered, computing the temporal coincidences and/or correlation (Step 12) between the auditory and the visual information present in the central region of the visual input means, deciding whether to trigger a learning of new visual filters or of a new auditory model, learning of a visual filter (Step 15) based on the clustering (Step 17) of visual patches correlated to the auditory information, learning an auditory model (Step 13) based on the clustering (Step 18) of auditory segments of auditory information correlated to visual patches derived from the visual input, and classifying each saliency map to modulate their relative importance.

The set of filters (Step 16) specifying default visual aspects for the system can be computed when no learned filters are used.

One saliency map per filter may be computed, and wherein each of them may represent an attractiveness of a visual location with respect to the filter.

The step of learning of a visual filter can increase the number of filters.

The visual/auditory input means for accepting visual/auditory information may be at least one of a sensor, a hardware interface and a software interface.

The visual input means for accepting visual information can be a camera.

The auditory input means for accepting visual information can be a microphone.

The processing means may be a processor and/or a signal processing unit formed of hardware and/or software.

The processing means can be adapted for parallel processing.

The timer logic can be at least one of a clock, a clock circuit and a counter.

The saccade is a logic that may define the time and step size of the camera movement.

The saliency computation (Step 10) can be defined by a weighting learner (Step 9) with regard to already learned auditory classifiers and all visual saliency filters.

The auditory classifier may be defined by correlations of auditory and visual properties.

The auditory classifier can be defined by an extracted auditory model.

The learning method of the auditory model may be defined by extracted auditory classes from a clustering step.

The clustering of auditory segments can be defined by their feature organization.

The clustering of auditory segments may be defined by auditory segments that have been correlated with visual properties.

The decision learner can be defined by a correlation between the visual and the auditory signal that is computed by mutual information.

The clustering of visual patch segments may be defined by their feature organization.

The learning method of visual saliency filters can be defined by learned segments from the clustering step.

The visual filters may be defined by additional visual saliency filters.

The saliency computation can be weighted with already learned visual filters and an already extracted auditory classifier.

The saccade logic may process a common saliency map resulting from the interaction of visual saliency filters and an auditory classifier.

The tracking can be defined by the position of the saccade logic resulted from a common saliency map.

The weighting learner is defined by auditory classifiers and learned visual saliency filters.

In another aspect of the invention, system for processing visual and auditory information is provided, comprising a camera, a microphone, a processing means, a timer logic, and a saccade logic, the system being configured to perform the method defined above.

### Brief description of the drawings

- Fig. 1: is an overview of the controller system setup.
- Fig. 2: is a flowchart illustrating an initial phase of the inventive method for the controller system.
- Fig. 3: is a flowchart illustrating a correlation of visual and auditory signals performed by the inventive method.
- Fig. 4: is a flowchart illustrating a learning process of visual filters and auditory classifiers by the inventive method.
- Fig. 5: is a flowchart illustrating a camera controller system with a weighted saliency computation.

### Detailed description of the invention

Throughout the description a set of terms is used to specify features and/or to define functionalities and/or a setup of the invention. Hence a definition of relevant terms used hereafter is provided to facilitate an easy understanding of the invention.

"Visual saliency filters" are a set of operations transforming an image into activity maps. Simple operations are defined on the basis of static features like color or motion and the related activity maps represent the relevance of this feature in the scene. E. g. an image sequence of a moving cup will result into a map that represents the positions of motion.

"Model-based filters" (or "learned visual saliency filters") on the other hand are a set of operations referring to the principles of visual saliency filters. In contrast to a simple operation, these filters are learned from the scene and adapted towards object appearance (see also below).

"Feature organization" describes a configuration of an object under determined conditions. These conditions are defined by principles like proximity, continuation, closure and similarity. In visual perception: A green cup can be grouped by the similarity of color and intensity. In auditory perception: Tones that are close in time are grouped together by trend.

A "saliency map" is a topographically oriented map that filters an image with features like color, motion and intensity extracted from the environment.

A "common saliency map" summarizes saliency maps from color, intensity and, e.g., motion filtering into one map. The maximum response defines a location that determines how different it is from its surroundings (see below).

An "auditory classifier- auditory model" is to be understood as a set of operations separating the incoming audio signal according to an auditory model, e.g., like cup knocking and background noise.

An "auditory class" describes the auditory object appearance according to the grouping of elements based on their feature organization.

An "auditory segment" contains the raw audio signal of a defined length that results from a high-yield audio-visual correlation.

A "Saccade logic" defines the time and step size of the camera movement. This logic receives an image that describes the importance of the scene. The logic extracts the most important point in order to define the camera movement.

A "visual patch segment" is a region of the image that contains raw visual features that result from a high yield audio-visual correlation.

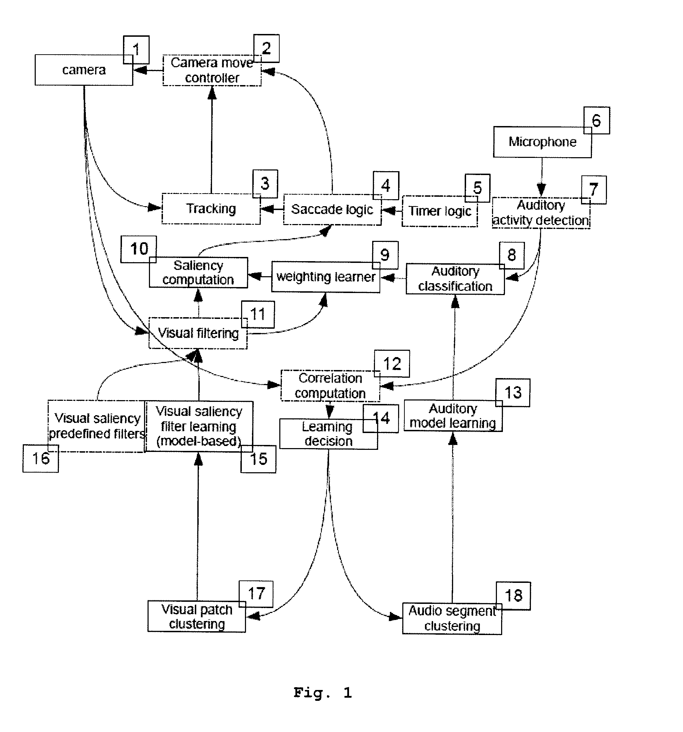

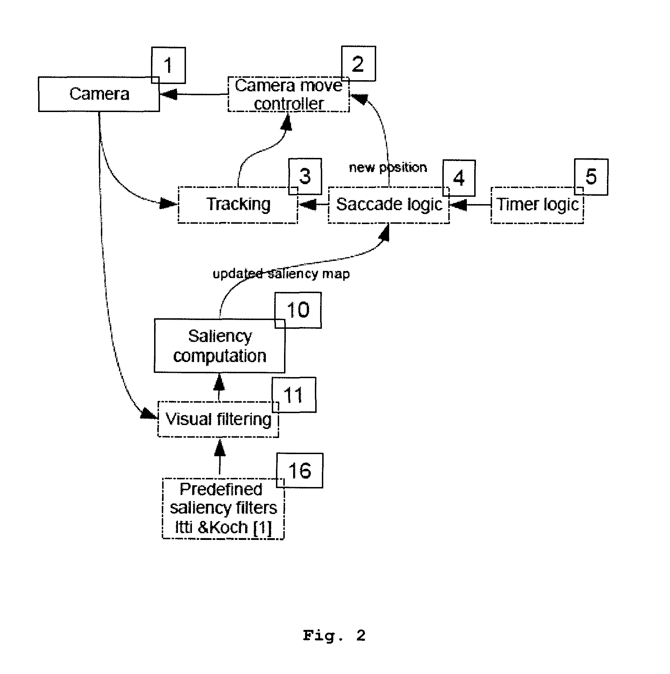

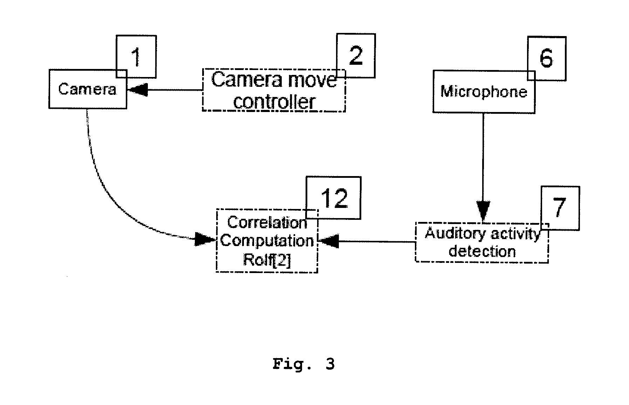

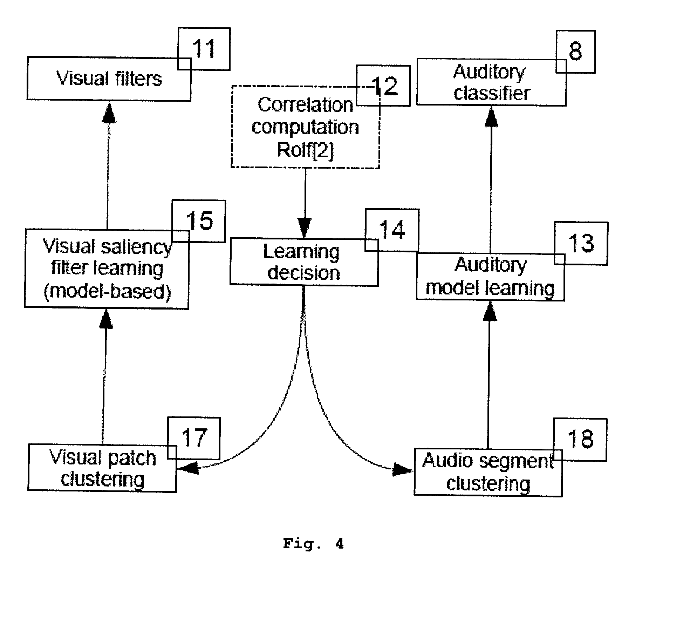

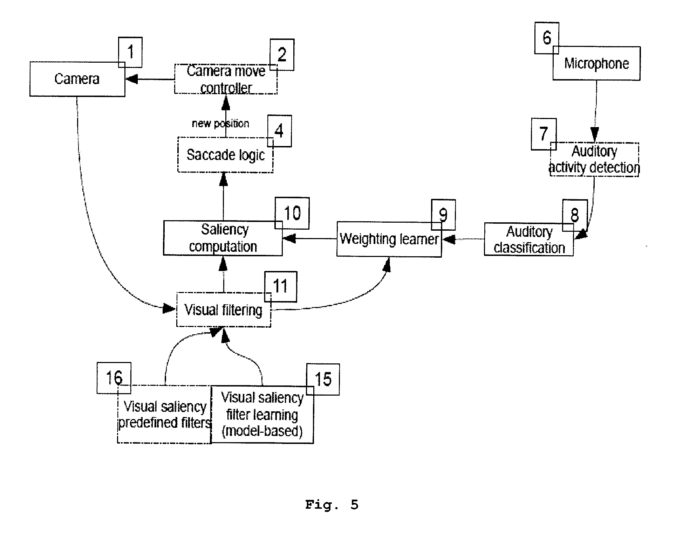

The present method can be implemented on a robot platform in order to control the camera eye towards interesting points like objects of the environment (Fig. 1 for an overview). The method recognizes objects that are learned with auditory characteristics like speech or ringing. The system learns to focus towards those points whose visual properties have been correlated with auditory cues in a learning phase. In the initial phase of the system the gaze selection of the camera is reactive. In this phase the camera system is driven by a bottom up selected stimuli and moves the camera forward with a reflexive shift (Fig. 2). During a learning process (Fig. 3 and Fig. 4) the system acquires automatically additional visual saliency filters and an auditory classifier. During the learning of new visual filters, the saliency computation can be weighted additionally with an auditory classifier in order to shift the camera gaze towards interesting points. The weights are extracted from a weighting learner. The weights are learned during an auditory classification step and a visual filtering step. The architecture updates a saliency map during the learning process that gives an updated position for the camera movement (Fig. 5). In the following, the invention is described in detail and is referenced to the figures. Figs. 3-5 show single temporal states of the system according to Fig. 1. The dashed boxes summarize known components; solid boxes are part of the invention.

At each time when the camera moves on a new position and tracks the scene for a defined time, the field of vision is processed with visual filters. During this time interval, the central region of the scene is correlated (Step 12) with auditory cues. The further process generates a common saliency map and the maximum response is taken as new position of the camera. The visual filtering is determined in a first step by predefined filters (motion, flicker, orientation, intensity, texture...) (Step 16) and in a second step by additional learned filters (face, hands, fingers....) from a learning phase. The result of the visual filtering is a set of saliency maps that are summarized with a saliency computation.

The saliency computation preliminarily summarizes the responses of the predefined filters. During the learning of additional filters, the saliency computation can be weighted (Step 9) with an auditory classifier (Step 8). This results in a map that can be used to control the camera system on a new position in the scene. In relation to the new position, the movement is defined by a saccade logic (Step 4) that calculates the center position by using common saliency map in order to access the camera move controller (Step 2). Secondly, the point in time of the movement is determined by a timer logic. Afterwards, the camera system reevaluates the scene center and further tracks the scene.

During the track of the scene, the system acquires sound by means of a microphone (Step 6) and separates the sound in active and non active audio segments (Step 7). Preliminary, in a first learning phase the audio signal is not classified and is not accessible for the saliency computation (Step 10). The properties of the active audio segments are correlated with visual properties of the camera center and serves as criterion for retaining auditory segments and visual segments for a further learning process. The correlation computation provides a basis to extract visual and auditory segments in order to cluster (Steps 17-18) them in a further learning step and to prepare classes for learning of an auditory classifier and for learning additional visual saliency filters (Step 15) (see Fig. 3 and Fig. 4). The correlation computation is carried out during the tracking of the scene and results in a temporal statistic that provides indications about the mutuality of visual properties and auditory cues. The decision of retaining the single segments for clustering is defined by a decision learner (Step 14). In a first step, the decision learner is estimated by the correlation statistics and secondly defines a classifier in order to extract visual regions and auditory segments that have been correlated in particular.

The visual patch clustering collects visual regions that have been particularly correlated with auditory cues and detects training segments for learning saliency filters. In a parallel learning phase, the extracted audio segments are collected and clustered. The audio segment clustering extracts training segments for the auditory model learner in order to estimate an auditory classifier (see Fig. 4). During the learning phase of saliency filters and an auditory classifier, the camera system is controlled with a weighted saliency computation towards interesting points. The auditory classifier can be connected to the saliency maps resulted from visual filtering. This connection is defined by a weighting learner, whereas a learned association of an auditory classification step and responses of the saliency maps are stored and modified.

It should be understood that the foregoing relates only to embodiments of the present invention and that numerous changes and modifications made therein may be made without departing from the scope of the invention as set forth in the following claims.
1. L. Itti, C. Koch, and E. Niebur. A model of saliency-based visual attention for rapid scene analysis. IEEE Transactions on Pattern Analysis and Machine Intelligence, 20(11):1254-1259, November 1998.
2. Slaney, M., Covell, M. FaceSync: A Linear Operator for Measuring Synchronization of Video Facial Images and Audio Tracks. In NIPS, pages 814-820, 2000.
3. Kidron, E., Schechner, Y., Elad, M. Cross-Modal Localization via Sparsity. IEEE transactions on signal processing, 55:1390-1404, 2007.
4. M. Rolf et al., Attention via synchrony: Making use of multimodal cues in social learning, IEEE Transactions on Autonomous Mental Development, vol. 1, Step 1, 05/2009 2009.
5. Deb Roy et al., Learning Audio-Visual Associations using Mutual Information. Proceedings of International Workshop on Integrating Speech and Image Understanding, Corfu, Greece, pages 147-163, 1999.
6. D.Walther et al., Modeling attention to salient proto-objects. Neural Networks, 19:1395-1407, 2006.
7. H. Wersing et al., A biologically motivated system for unconstrained online learning of visual objects. Proc. Int. Conf. Artif. Neural Networks ICANN 2006, Athens. Vol. 2, pp. 508-517.
8. J. Ruesch et al., Multimodal saliency-based bottom-up attention, a framework for the humanoid robot icub, IEEE International Conference on Robotics and Automation Pasadena, CA, USA, May, 2008, May 2008.
9. http://en.wikipedia.org/wiki/Object_recognition
10. http://en.wikipedia.org/wiki/Salience_(neuroscience)
11. http://de.wikipedia.org/wiki/Netzhaut
12. http://de.wikipedia.org/wiki/Fovea_centralis

## Claims

1. A computer-assisted method for controlling a camera system having visual and auditory input means, the method comprising the steps of:
- gaining visual information from a visual input means,
- gaining auditory information from an auditory input means,
- processing the visual and auditory information by
o computing a set of filters specifying default visual aspects (Step 16) for the system by a processing means,
o computing a set of saliency maps (Step 10) during visual filtering by the processing means,
o computing a saliency which weights (Step 9) each saliency map according to an auditory classification (Step 8) of the auditory information by the processing means,
o determining when a new saccade should be triggered by a timer logic (Step 5), and
- choosing a position for the visual input means to look at within the available saliency maps by a saccade logic (Step 4),
- controlling a tracking movement (Step 2) of the visual input means so that a gazed point is kept in a central region of the visual input means before a next saccade is triggered,
- computing temporal coincidences and/or correlation (Step 12) between the auditory and the visual information present in the central region of the visual input means,
- deciding (Step 14) whether to trigger a learning of new visual filters or of a new auditory model,
- learning of a visual filter based (Step 15) on the clustering of visual patches (Step 17) correlated to the auditory information,
- learning an auditory model based (Step 13) on a clustering of auditory segments (Step 18) of auditory information correlated to visual patches derived from the visual information, and
- classifying each saliency map to modulate their relative importance.

2. The method of claim 2,
wherein the set of filters specifying default visual aspects for the system are computed when no learned filters are used.

3. The method of claims 1 or 2,
wherein one saliency map per filter is computed, and wherein each of them represents an attractiveness of a visual location with respect to the filter.

4. The method of any one of the claims 1 to 3,
wherein the step of learning of a visual filter increases the number of filters.

5. The method of any one of the claims 1 to 4, wherein the visual/auditory input means for accepting visual/auditory information is at least one of a sensor, a hardware interface and a software interface.

6. The method of any one of the claims 1 to 5, wherein the visual input means for accepting visual information is a camera.

7. The method of any one of the claims 1 to 6, wherein the auditory input means for accepting visual information is a microphone.

8. The method of any one of the claims 1 to 7, wherein the processing means is a processor and/or a signal processing unit formed of hardware and/or software.

9. The method of any one of the claims 1 to 8, wherein the processing means is adapted for parallel processing.

10. The method of any one of the claims 1 to 9, wherein the timer logic is at least one of a clock, a clock circuit and a counter.

11. The method of any one of the claims 1 to 10, wherein the saccade is a logic that defines the time and step size of the camera movement.

12. The method of any one of the claims 1 to 11, wherein the saliency computation is defined by a weighting learner with regard to already learned auditory classifiers and all visual saliency filters.

13. The method of any one of the claims 1 to 12, wherein the auditory classifier is defined by correlations of auditory and visual properties.

14. The method of any one of the claims 1 to 13, wherein the auditory classifier is defined by an extracted auditory model.

15. The method of any one of the claims 1 to 14, wherein the learning method of the auditory model is defined by extracted auditory classes from a clustering step.

16. The method of any one of the claims 1 to 15, wherein the clustering of auditory segments is defined by their feature organization.

17. The method of any one of the claims 1 to 16, wherein the clustering of auditory segments is defined by auditory segments that have been correlated with visual properties.

18. The method of any one of the claims 1 to 17, wherein the decision learner is defined by a correlation between the visual and the auditory signal that is computed by mutual information.

19. The method of any one of the claims 1 to 18, wherein the clustering of visual patch segments is defined by their feature organization.

20. The method of any one of the claims 1 to 19, wherein the learning method of visual saliency filters is defined by learned segments from the clustering step.

21. The method of any one of the claims 1 to 20, wherein the visual filters are defined by additional visual saliency filters.

22. The method of any one of the claims 1 to 21, wherein the saliency computation is weighted with already learned visual filters and an already extracted auditory classifier.

23. The method of any one of the claims 1 to 22, wherein the saccade logic processes a common saliency map resulting from the interaction of visual saliency filters and an auditory classifier.

24. The method of any one of the claims 1 to 23, wherein the tracking is defined by the position of the saccade logic resulted from a common saliency map.

25. The method of any one of the claims 1 to 24, wherein the weighting learner is defined by auditory classifiers and learned visual saliency filters.

26. A system for processing visual and auditory information, comprising:
- a camera,
- a microphone,
- a processing means,
- a timer logic,
- a saccade logic, the system being configured to perform a method according to any one of the claims 1 to 25.

27. An autonomous robot, being provided with a system according to claim 26.

28. A land, air or sea vehicle, being provided with a system according to claim 26.

29. A computer program product, implementing a method according to any of claims 1 to 25 when run on a computing device.

## Amended claims

### Amended claims in accordance with Rule 137(2) EPC.

**1.** A computer-assisted method for controlling a camera system having visual and auditory input means, the method comprising the steps of:
- gaining visual information from a visual input means,
- gaining auditory information from an auditory input means,
- processing the visual and auditory information,
- choosing a position for the visual input means to look at within the available saliency maps by a saccade logic (Step 4),
- controlling a tracking movement (Step 2) of the visual input means so that a gazed point is kept in a central region of the visual input means before a next saccade is triggered,
**characterized by**
- computing, each time the camera tracks a scene for a defined time, temporal correlations (Step 12) between visual information present in the central region of the visual input means and auditory cues,
- processing the field of vision with visual filters
- wherein visual filtering is determined in a first step by predefined filters (Step 16) and in a second step by additional learned filters (Step 15) from a learning phase, and
wherein during the leaning phase a saliency computation is weighted (Step 9) with an auditory classifier (Step 8) to compute a map used to control the camera system on a new position in the scene defined by a saccade logic (Step 4) that calculates the center position by using the common saliency map in order to access the camera move controller (Step 2).
